# NEW EUROPEAN PATENT SPECIFICATION

(11) **EP 0 993 970 B2**
(45) Date of publication and mention of the opposition decision: **06.07.2005**
(45) Mention of the grant of the patent: 19.02.2003
(21) Application number: 98830615.5
(22) Date of filing: 15.10.1998
(51) Int. Cl.: B60C 27/10

(54) **Anti-skid device with improved release system**
Reifenkette mit verbessertem Entriegelungssystem
Chaîne anti-dérapante avec système de déverrouillage amélioré

(43) Date of publication of application: 19.04.2000
(73) Proprietor: Thule S.p.A., 23847 Molteno (Lecco) (IT)
(72) Inventor: Airoldi, Romolo, 23900 Lecco (IT); Arrigoni Neri, Marco, 23811 Ballabio (lecco) (IT); Kanellopoulos, Vasilios, 1256 Troinex (CH); Dogue, Isabelle, 74100 Annemasse (FR)
(74) Representative: Petruzziello, Aldo

(56) References cited:
- EP-A- 0 127 571
- EP-A- 0 352 873
- DE-A- 3 326 313
- DE-A- 3 400 780
- US-A- 1 620 894
- US-A- 4 146 075
- US-A- 4 416 318

## Description

The present invention relates to an anti-skid device, with an improved release system, normally destined to be mounted on vehicle tires.

When a vehicle is on a road surface covered with snow, sleet or ice, its tires do not have a good grip and dangerous veering or skidding of the vehicle can occur. To avoid these problems it is customary to use anti-skid devices, commonly called snow chains.

Snow chains, normally mounted on the driving wheels of the vehicle, bite into the snow and/or ice deposited on the road surface, increasing the tread traction and allowing the vehicle tires to achieve a good grip.

Various anti-skid devices are already known and available on the market. They normally have as disclosed in EP 0 352 873:
a) an inner side portion consisting of an openable ring which, in the position of use, is closed and placed on the inside of the wheel,
b) an outer side portion consisting of chains or the like, also closed in a ring during use and placed on the outside of the wheel;
c) joining elements for these two portions a) and b) consisting of portions of chain which are variously disposed in a ladder, a rhombus or X-shape, in order to achieve the tread traction;
d) a device for tensioning all these elements.

Types of chains widely found on the market provide for the inner side portion to consist of an inner flexible ring that can be opened in order to allow it to be widened, during assembly, so that it can be fitted to the inside of the vehicle wheel. Said inner ring normally consists of a metal cable covered by a continuous or discontinuous sheath.

Said known chains have an inner locking closure according to which one end of cable of the inner ring is provided with an elongated hollow engagement means in which a portion thereof is able to receive a head provided at the other end of the cable, whilst another portion thereof is able to retain said head, a channel being provided that allows the cable to move along said engagement means, so that the head comes to be locked inside the locking portion.

This type of inner closure, though allowing easy locking of the ring portion, nevertheless presents some problems during disassembly.

According to document DE 3 400 780 A there is disclosed a generic anti-skid device according to the preamble of claim 1. This device comprises a fastener disposed on the inner ring and a securing element to avoid an unitentional self-opening of the fastener, wherein the securing element can be operated from the outside of the tire.

In order to be able to remove the chains, the user is obliged to work on the inside of the wheel. In fact, he must look for the inner ring-closing device on the inside of the wheel and manually release said device. This operation can be somewhat awkward, annoying and complex. In fact the user must work in a rather inconvenient position, is forced to dirty his hands which inevitably come into contact with the tire and furthermore, has difficulty in finding the inner ring closing device which remains hidden on the inside of the wheel. Consequently said chain removing operation is too slow and tiresome.

The object of the invention is to eliminate these drawbacks by providing an anti-skid device, with an improved release system, that can be applied to any vehicle and that considerably reduces the inconvenience and problems during the removal stage.

Another object of the present invention is to provide such an anti-skid device, with an improved release system, that remains firmly anchored to the wheel of the vehicle and is safe and easy to produce.

These objects have been achieved in accordance with the invention, with the characteristics listed in the appended independent claim 1.

Preferred embodiments of the invention emerge from the dependent claims.

In the anti-skid device with improved release system according to the invention, operating means able to release the closing device of the inner ring of the anti-skid device are provided. Said operating means can be operated by the user from the outside of the wheel. Obviously safety measures are provided to avoid accidental operation of the operating means and to prevent said operating means from interfering with rolling of the wheel as the vehicle travels along.

The user, acting manually on said operating means, from the outside of the wheel, causes release of the inner ring closing device of the chain. In such a way all the problems due to the fact that it was necessary to work directly on the closing device of the inner ring of the chain placed on the inside of the wheel are eliminated.

Obviously different types of inner ring releasing devices can be provided to which different types of operating means can be adapted, though without departing from the scope of the invention.

Further characteristics of the invention will be made clearer by the detailed description that follows, referring to purely exemplary and therefore non-limiting embodiments, illustrated in the appended drawings, in which:
Figure 1 is an axonometric view of the anti-skid device with the improved release system according to the invention, applied to the wheel of a vehicle and seen from the inside of the wheel;
Figure 2 is an axonometric view of the anti-skid device with improved release system according to the invention, applied to the wheel of a vehicle and seen from the outside of the wheel;
Figure 3 is a diagrammatic view, partly in section, of an embodiment of a closing device for the inner ring of the anti-skid device, with the improved release system according to the invention;
Figure 4 is an exploded view of the device in Figure 3,
Figures 5-7 are cross-sections, as in Figure 3, of further embodiments of a closing device for the inner ring of an anti-skid device with improved release system according to the invention.

The anti-skid device with improved release system according to the invention will be described with the aid of the figures

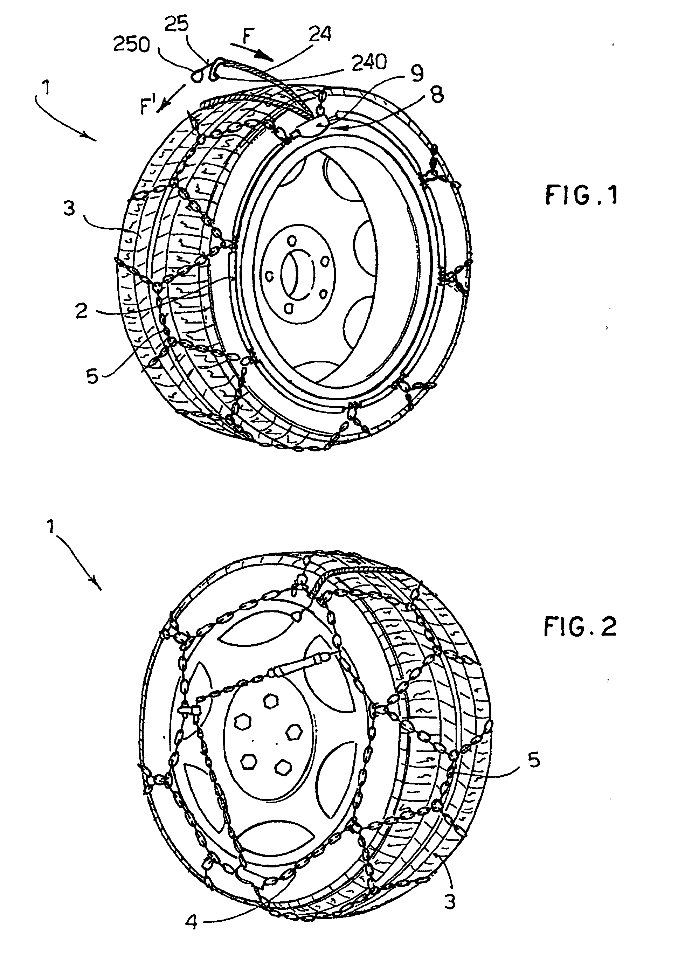

With reference to Figure 1, an anti-skid device, indicated as a whole with reference numeral 1, comprises an inner side portion 2, which is suitable to be disposed on the inside of the tire 3 and an outer side portion 4

As shown in Figure 2, the outer part 4 of the anti-skid device 1 is realized in a known manner by means of a closed chain ring. These two inner and outer portions 2 and 4 are connected by various portions of anti-skid chain 5 arranged in different ways, in this case in a rhomboidal pattern

The inner side portion 2 consists of an openable ring realized with a steel cable 6 coated with a suitable sheath 7, preferably discontinuous. The cable 6 is capable of being deformed to adapt to the curvature of the wheel. The ring 2 is provided at its two openable ends with a closing and locking element 8.

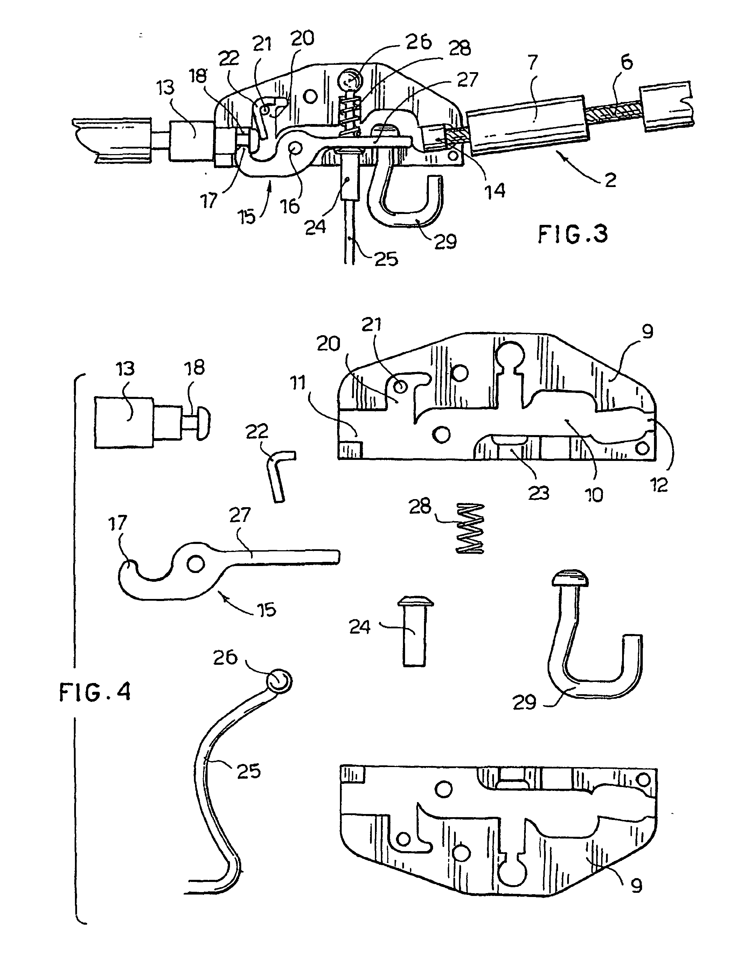

As shown in Figures 3 and 4 the locking element 8 comprises an outer body or shell 9, made of die-cast plastic, by means of two substantially symmetrical parts that can be connected to each other, or in a single piece. The shell 9 has inside it a longitudinal seat 10 that has two opposite openings 11 and 12 destined respectively to receive the two free ends 13 and 14 of the inner ring portion 2. The end 14, which is widened with respect to the diameter of the cable 6, is blocked irremovably inside the opening 12, whilst the end 13 is slidable in the opening 11.

A lever 15 pivoted about a pin 16 is positioned in the seat 10. The lever 15 has at one end a tooth 17 that engages in a cavity 18 formed at the end 13 of the ring 2 for locking thereof.

In the shell 9, near the opening 11, a cavity 20 is made inside which an L-shaped elastic element 22, pivoted around a pin 21, is positioned. When the end 13 of the ring 2 is inserted in the opening 11, it abuts against the elastic element 22 which is compressed In this way when the tooth 17 of the lever 15 is released, the thrust of the elastic element 22 causes facilitated expulsion of the end 13 of the ring 2.

In the central part of the shell 9, at right angle to the seat 10, a cylindrical seat 23 is provided inside which is positioned a flexible, hollow small cylinder or sheath 24 that abuts against an arm 27 of the lever 15 opposite the tooth 17. A cable or a stem 25 that ends in a ball 26 is locked inside the shell 9 and is made to pass through the arm 27 of the lever 15 and inside the small cylinder 24 so as to exit therefrom.

A spring 28 that presses the arm 27 of the lever 15 against the end of the small cylinder 24 is placed around the cable 25 between the arm 27 of the lever 15 and the ball 26.

In practice, a series of small cylinders or a single sheath 24 of a certain length is provided, such as to almost entirely cover the cable 25, leaving free an end 250 thereof, for example in the form of a loop, as shown diagrammatically in Figure 1.

The series of small cylinders, preferably anchored to each other, or the sheath 24 ends in a terminal hook 240 for coupling to an element of the chain. In this manner fixing of the "cord" 24, 25 which does not cause hindrance during movement, is ensured. Likewise accidental operation of the locking device is prevented, in that tensioning of the series of small cylinders or sheath 24 prevents any shifting in the direction of the arrow F of Figure 1, necessary to obtain release.

In fact, to cause release of the closing element 8, it is necessary to push the small cylinders 24 in the direction of the arrow F, at the same time pulling the cable 25 in the opposite direction (arrow F'), through the end loop 250, as shown in Figure 1. This operation, which can be easily accomplished from the outside of the tire causes counterclockwise rotation of the lever 15 around the pin 16 and thus disengagement of the tooth 17 from the cavity 18 of the end 13 of the ring 2. The elastic element 22, turning on the pin 21, then causes ejection of the end 13 and thus opening of the ring 2. The spring 28, pressing on the arm 27 of the lever 15, ensures that the tooth 17 returns to its working position.

Constrained to the arm 27 of the lever 15, near its free end, is a hook 29 able to couple to a length of chain to give better tensioning of the anti-skid device 1. In the embodiment illustrated the hook 29 acts as a further safety element, exerting a pull on the arm 27 of the lever 15 and keeping the tooth 17 in a working position, avoiding any accidental unhooking of the extremity 13 of the inner ring 2.

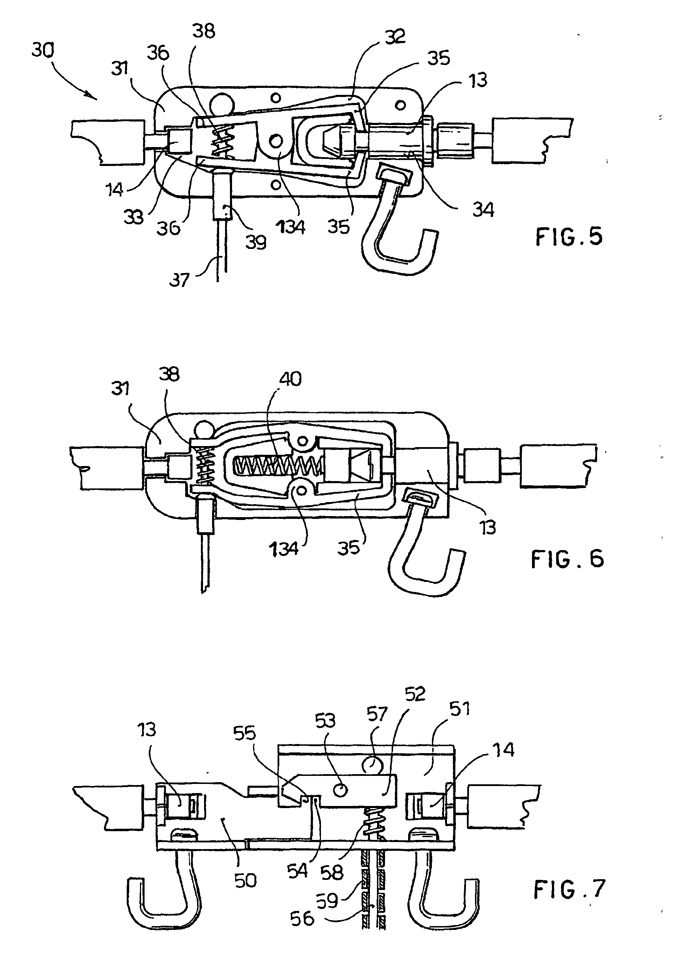

In Figure 5 a further embodiment of a closing element 30 of the inner ring 2 with an improved release system according to the invention is shown.

The closing element 30 comprises a shell 31 inside which a longitudinal seat 32 is formed presenting two opposite apertures 33 and 34 able to receive the two ends 14 and 13 of the ring 2. The end 14 is irremovably locked in the aperture 33 and the end 13 can slide in the opening 34.

In the seat 32 is positioned a caliper 134 having at one end two claws 35 able to lock the end 13 of the inner ring 2 and, at the other end, two operating arms 36 bearing two through holes though which is passed a cable 37 blocked by means of a ball 38 in the shell 31. Between the two arms 36, around the cable 37, a spring 38 is positioned which keeps the two arms 36 spaced apart so as to cause the claws 35 to grip the end 13 of the ring 2.

A hollow small cylinder or sheath 39 is inserted around the cable 37 so as to abut against an arm 36 of the caliper 134. The series of small cylinders or sheath 39 is long enough to be able to be operated by an operator from the outside of the tire, as in the preceding embodiment. In this way the operator, by applying pressure on the sheath 39 and pulling on the cable 37, causes the arms 36 to draw together and thus the claws 35 to draw apart leaving the end 13 of the inner ring free.

In figure 6 a substantially similar embodiment of the invention to that in Figure 5 is shown, in which a spring 40 is provided, positioned lengthwise in the caliper 134, so as to abut against the end 13 of the ring 2. When the claws 35 are released, the spring 40 presses against the end 13 facilitating ejection thereof from the shell 31.

In Figure 7 a further embodiment of the invention is shown, in which the closing device of the ring 2 is realized by means of two blocks 50 and 51 of sheet metal, which irremovably receive the ends 13 and 14 of the ring 2. Inside the block 51 a lever 52 pivoted around a pin 53 is positioned. The lever 52 has a cavity 54 that receives a protrusion 55 of the block 50 to lock it. A cable 56 passes through the lever 52 and is locked at one end of the lever 52 by means of a ball 57. Between the lever 52 and a wall of the block 51, around the cable 56 is positioned a spring 58 that keeps the lever 52 in the working position so as to clasp the block 50.

The cable 56 is long enough to be operated by an operator from the outside of the tire. When the cable 56 is pulled the ball 57 abuts against the lever 52 causing rotation thereof around the pin 53; release of the block 50 then occurs. A sheath 59 can be provided around the cable 56 such as to avoid incorrect or accidental operation of the cable 56.

From the embodiments described above the advantages of the anti-skid device with the improved release system according to the invention appear obvious. Said anti-skid device is in fact able to be released by a user operating from the outside of the vehicle wheel, by means of simple compression or traction of a series of small cylinders or sheath, of a cable or of similar means.

## Claims

1. An anti-skid device comprising an inner side portion (2) having free openable end (13, 14), that can be closed by means of a closing element (8) to form a ring, suitable to be placed on the inside of the tire (3), an external side portion (4) suitable to be positioned on the outside part of the tire (3), said portions being connected by variously composed elements (5) achieving the tread traction, whereby operating means (24, 25; 39, 37; 56, 58) are provided that can be operated from the outside of the tire (3) **characterized in that** said operating means are able to produce release of the closing element (8) to obtain opening of said free ends (13, 14) and thereby of the inner ring.

2. A device according to claim 1, **characterized in that** said operating means (24,25;39,37) comprise a series of small hollow cylinders or a sheath (24; 39) that can slide on a cable (25; 37), the sheath (24; 39) and the cable (25; 37) being able to be operated by compression and traction, respectively, from the outside of the tire (3), to cause release of the locking means (15;134) that retain one end (13) of said inner portion (2) of the anti-skid device.

3. A device according to claim 2, **characterized in that** said cable (25; 37) ends with a loop-shaped end (250) protruding from said sheath (24) in turn ending with a hook (240) for fixing to an element of the anti-skid device.

4. A device according to claim 1, **characterized in that** said operating means (56) comprise a cable (56) able to be operated from the outside of the tire (3), by pulling, to cause disengagement of a locking means (52) that holds one end (13) of said inner portion (2).

5. A device according to any one of claims 1 to 3, **characterized in that** elastic means (22; 40) are provided such as to ensure ejection of the free end (13) of said inner portion (2), when said operating means (24, 25; 39, 37) are operated to release said locking means (15; 134).

6. A device according to any one of the preceding claims, **characterized in that** spring means (28; 58) are provided such as to hold the locking means (15; 134; 52) in the locking position.

7. A device according to any one of the preceding claims, **characterized in that** said locking means (15) is a lever comprising a tooth (17) that engages in a cavity (18) of the end (13) of said inner portion (2) to lock it.

8. A device according to any one of claims 1-3, 5, 6, **characterized in that** said locking means (34) comprises a caliper (134) having two claws (35) able to block the end (13) of the inner portion (2).

9. A device according to claim 4, **characterized in that** said locking means (52) is a lever (52), positioned in a block (51) of sheet metal, to which one end (14) of said inner portion (2) is fixed, and able to hold a block (50) of sheet metal to which the other end (13) of said inner portion (2) is fixed.

10. A device according to claim 7, **characterized in that** it comprises a hook (29), fixed to said lever (15), able to couple with a portion of the anti-skid device for tensioning thereof, said hook (29) exerting a force that tends to keep said tooth (17) of the lever (15) in the working position, avoiding possible accidental unhooking of the end (13) of said inner portion (2).

## Patentansprüche

1. Eine Gleitschutzvorrichtung, die einen inneren Seitenabschnitt (2) mit freien, zu öffnenden Enden (13, 14) umfasst, die mit Hilfe eines Schließelements (8) geschlossen werden können, um einen Ring zu bilden, der geeignet ist, an der Innenseite des Reifens (3) angeordnet zu werden, einen äußeren Seitenabschnitt (4), der geeignet ist, an der Außenseite des Reifens (3) angeordnet zu werden, wobei die genannten Abschnitte durch unterschiedlich zusammengesetzte Elemente (5) verbunden werden, durch die die Reibung des Profils entsteht, und Bedienungselemente (24, 25; 39; 37; 56, 59) vorgesehen sind, die von der Außenseite des Reifens (3) aus betätigt werden können, **dadurch gekennzeichnet, dass** die genannten Bedienungselemente in der Lage sind, die Freigabe des Schließelements (8) zu veranlassen, um die Öffnung der genannten freien Enden (13, 14) und **dadurch** des inneren Rings zu erzielen.

2. Eine Vorrichtung gemäß Anspruch 1, **dadurch gekennzeichnet, daß** die genannten Bedienungselemente (24, 25; 39, 37) eine Reihe kleiner, hohler Zylinder oder eine Hülse (24, 39) umfassen, die über ein Kabel (25, 37) gleiten kann, wobei die Hülse (24, 39) und das Kabel (25, 37) jeweils über Druck und Zug von der Außenseite des Reifen (3) aus betätigt werden können, um die Freigabe der Schließelemente (15; 134) zu veranlassen, die ein Ende (13) des genannten inneren Abschnitts (2) der Gleitschutzvorrichtung festhalten.

3. Eine Vorrichtung gemäß Anspruch 2, **dadurch gekenzeichnet, daß** das genannte Kabel (25; 37) in einem schlaufenförmigen Ende (250) endet, das aus der genannten Hülse (24) hervorragt, die wiederum in einem Haken (240) zur Befestigung an einem Element der Gleitschutzvorrichtung endet.

4. Eine Vorrichtung gemäß Anspruch 1, **dadurch gekennzeichnet, daß** die genannten Bedienungselemente (56) ein Kabel (56) umfassen, das von der Außenseite des Reifens (3) durch Ziehen betätigt werden kann, um eine Freigabe des Verriegelungselements (52) zu veranlassen, das ein Ende (13) des genannten inneren Abschnitts (2) hält.

5. Eine Vorrichtung gemäß einem beliebigen der Ansprüche von 1 bis 3, **dadurch gekennzeichnet, daß** elastische Elemente (22; 40) vorgesehen sind, um den Ausstoß des freien Endes (13) des genannten inneren Abschnitts (2) zu garantieren, wenn die genannten Bedienungselemente (24, 25; 39, 37) betätigt werden, um die genannten Verriegelungselemente (15; 134) freizugeben.

6. Eine Vorrichtung gemäß einem beliebigen der vorausgegangenen Ansprüche, **dadurch gekennzeichnet, daß** Federelemente (28; 58) vorgesehen sind, um die Verriegelungselemente (15; 134; 52) in der verriegelten Stellung zu halten.

7. Eine Vorrichtung gemäß einem beliebigen der vorausgegangenen Ansprüche, **dadurch gekennzeichnet, daß** das genannte Verriegelungselement (15) ein Hebel ist, der einen Zahn (17) umfaßt, welcher in eine Aushöhlung (18) des Endes (13) des genannten inneren Abschnitts (2) eingreift, um sie zu verriegeln.

8. Eine Vorrichtung gemäß einem beliebigen der vorausgegangenen Abschnitte 1, 3,5,6, **dadurch gekennzeichnet, daß** das genannte Verriegelungselement (34) eine Zange (134) mit zwei Klauen (35) umfaßt, die das Ende (13) des inneren Abschnitts (2) verriegeln können.

9. Eine Vorrichtung gemäß Anspruch 4, **dadurch gekennzeichnet, daß** sich in dem genannten Verriegelungselement (52) ein Hebel (52) befindet, der in einem Block (51) aus Blech angeordnet ist, an dem ein Ende (14) des genannten inneren Abschnitts (2) befestigt ist, und der einen Block (50) aus Blech halten kann, an dem das andere Ende (13) des genannten inneren Abschnitts (2) befestigt ist.

10. Eine Vorrichtung gemäß Anspruch 7, **dadurch gekennzeichnet, daß** sie einen Hakten (29) umfaßt, der an dem genannten Hebel (15) befestigt ist, der mit einem Abschnitt der Gleitschützvorrichtung zwecks deren Spannung verkoppelt werden kann, wobei der genannte Haken (29) eine Kraft ausübt, die dazu neigt, den genannten Zahn (17) des Hebels (15) in Arbeitsstellung zu halten und ein mögliches versehentliches Aushaken des Endes (13) des genannten inneren Abschnitts (2) zu vermeiden.

## Revendications

1. Dispositif anti-glissement comprenant une portion latérale interne (2), présentant des extrémités libres ouvrables (13, 14) pouvant être fermées au moyen d'un dispositif de fermeture (8) pour former un anneau, apte à être placé sur la partie interne du pneu (3), une portion latérale externe (4) apte à être positionnée sur la partie externe du pneu (3), lesdites portions étant reliées par différents types d'éléments (5) agissant sur la bande de roulement, où des moyens d'actionnement (24, 25 ; 39, 37 ; 56, 59) pouvant être actionnés depuis la partie externe du pneu (3) sont prévus, **caractérisé en ce que** lesdits moyens d'actionnement sont en mesure de provoquer le relâchement du dispositif de fermeture (8) pour obtenir l'ouverture desdites extrémités libres (13, 14) et donc de l'anneau interne.

2. Dispositif conforme à la revendication 1, **caractérisé par le fait que** lesdits moyens d'actionnement (24, 25 ; 39, 37) comprennent une série de petits cylindres creux ou une gaine (24 ; 39) qui peuvent coulisser sur un câble (25 ; 37), la gaine (24 ; 39) et le câble (25 ;37) pouvant être actionnés respectivement par compression et par traction depuis la partie externe du pneu (3) pour provoquer le relâchement des moyens de blocage (15 ; 134) qui retiennent une extrémité (13) de ladite portion interne (2) du dispositif anti-glissement.

3. Dispositif conforme à la revendication 2, **caractérisé par le fait que** ledit câble (25 ; 37) se termine par une extrémité en boucle (250) qui sort de ladite gaine (24) et se terminant à son tour par un crochet (240) pour se fixer à un élément du dispositif anti-glissement.

4. Dispositif conforme à la revendication 1, **caractérisé par le fait que** les moyens d'actionnement (56) comprennent un câble (56) apte à être actionné depuis la partie externe du pneu (3), en tirant, pour dégager un moyen de blocage (52) qui retient une extrémité (13) de ladite portion interne (2).

5. Dispositif conforme aux revendications 1 à 3, **caractérisé par le fait que** des moyens élastiques (22 ; 40) permettent une expulsion de l'extrémité libre (13) de ladite portion interne (2) lorsque les moyens d'actionnement (24, 25 ; 39, 37) sont actionnés pour relâcher les moyens de blocage (15 ; 134).

6. Dispositif conforme à n'importe laquelle des revendications précédentes, **caractérisé par le fait que** des moyens à ressort (28 ; 58) sont prévus afin de retenir les moyens de blocage (15 ; 134 ; 52) dans leur position de blocage.

7. Dispositif conforme à n'importe laquelle des revendications précédentes, **caractérisé par le fait que** ledit moyens de blocage (15) est un levier comprenant une dent (17) qui s'engage dans une cavité (18) à l'extrémité (13) de ladite portion interne (2) afin de la bloquer.

8. Dispositif conforme à n'importe laquelle des revendications 1-3,5,6, **caractérisé par le fait que** le moyen de blocage (34) comprend une pince (134) possédant deux mâchoires (35) en mesure de bloquer l'extrémité (13) de la portion interne (2).

9. Dispositif conforme à la revendication 4, **caractérisé par le fait que** ledit moyen de blocage (52) est un levier (52) positionné dans un bloc (51) en tôle auquel est fixée une extrémité (14) de ladite portion interne (2), et en mesure de tenir un bloc (50) en tôle auquel est fixée l'autre extrémité (13) de ladite portion interne (2).

10. Dispositif conforme à la revendication 7, **caractérisé par le fait qu'**il comprend un crochet (29) fixé audit levier (15) en mesure de s'accrocher à une portion du dispositif anti-glissement pour le mettre en tension, ledit crochet (29) exerçant une force qui tend à garder la dent (17) du levier (15) en position de travail, ce qui a pour effet d'éviter un décrochement accidentel de l'extrémité (13) de ladite portion interne (2).
